# EUROPEAN PATENT APPLICATION

(11) **EP 4 468 499 A1**
(43) Date of publication of application: **27.11.2024**
(21) Application number: 23900920.2
(22) Date of filing: 09.11.2023
(51) Int. Cl.: H01M 50/383, H01M 50/35, H01M 50/591, H01M 50/588, H01M 50/211, H01M 50/249, H01M 50/242, H01M 10/658

(54) **BATTERY MODULE, AND BATTERY PACK AND VEHICLE COMPRISING SAME**

(30) Priority: 05.12.2022 KR 20220167608; 31.03.2023 KR 20230043199
(71) Applicant: LG Energy Solution, Ltd., Seoul 07335 (KR)
(72) Inventor: HAN, Min-Hee, Daejeon 34122 (KR); PARK, Jeong-Hoon, Daejeon 34122 (KR); SHIN, Jin-Kyu, Daejeon 34122 (KR); HAN, Seung-Won, Daejeon 34122 (KR); JUNG, Hye-Mi, Daejeon 34122 (KR)
(74) Representative: Plasseraud IP
(86) International application number: PCT/KR2023/018008
(87) International publication number: WO 2024/122901

(57) **Abstract**

The present disclosure discloses a battery module with enhanced safety. A battery module according to an aspect of the present disclosure includes: a cell stack including a plurality of battery cells stacked in at least one direction; a module case configured to accommodate the cell stack; a bus bar assembly including a bus bar terminal and a bus bar frame configured such that the bus bar terminal is seated thereon, and configured to electrically connect the plurality of battery cells; and a cover member extending from one end of the bus bar frame in a direction toward the cell stack so as to cover at least a portion of the cell stack.

## Description

### TECHNICAL FIELD

The present disclosure relates to a battery module, and a battery pack and a vehicle including the same, and more specifically, it relates to a battery module with enhanced safety, and a battery pack and a vehicle including the same.

The present application claims priority to Korean Patent Application No. 10-2022-0167608 filed on December 05, 2022 and Korean Patent Application No. 10-2023-0043199 filed on March 31, 2023 in the Republic of Korea, the disclosures of which are incorporated herein by reference.

### BACKGROUND ART

The present disclosure relates to a battery module, and a battery pack and a vehicle including the same, and more specifically, it relates to a battery module with enhanced safety, and a battery pack and a vehicle including the same.

Currently commercialized secondary batteries include nickel cadmium batteries, nickel hydrogen batteries, nickel zinc batteries, and lithium secondary batteries. Among these, lithium secondary batteries are in the spotlight for their advantages of free charging and discharging due to almost no memory effect, a very low self-discharge rate, and a high energy density, compared to nickel-based secondary batteries.

These lithium secondary batteries mainly use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween, and an exterior case, i.e., a battery case, that seals and stores the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving and storing energy, such as electric vehicles and energy storage systems (ESSs), as well as in small devices such as portable electronic devices. In this case, a battery module may be configured such that multiple secondary batteries electrically connected to each other are stored inside a module case.

However, since the multiple battery cells or multiple battery modules described above are densely disposed in a narrow space, they may be vulnerable to an thermal event. In particular, when a thermal event occurs in any one battery cell, heat, flame, sparks, and the like may be generated. If this heat or the like is transferred to another battery cell, an explosive chain reaction such as thermal propagation (TP) may occur, which may lead to explosion or ignition in the battery module.

Additionally, battery cells or the like may experience swelling as they are used or under abnormal operating conditions (over-charge, over-discharge, exposure to high temperatures, electrical short circuit, or the like). In addition, this swelling may accelerate the thermal runaway.

Moreover, medium and large battery packs used in electric vehicles or the like include a large number of battery cells and battery modules to increase output and/or capacity, and there may be users such as drivers nearby, so that the risk of a thermal chain reaction may increase more.

In particular, when mounting the battery module to a vehicle, it is usually installed in the lower part of the vehicle. In this case, if high-temperature gas is discharged upwards, it may cause great damage to the occupants.

Therefore, a battery module is required to be developed to delay heat transfer to other battery cells or battery modules and suppress swelling when a thermal event occurs in a specific battery cell or battery module, thereby improving safety, and to discharge gas in a desired direction, in particular, in the remaining directions excluding the upward direction.

### DISCLOSURE

### Technical Problem

The present disclosure has been designed to solve the problems of the related art, and therefore the present disclosure is directed to providing a battery module capable of improving safety by delaying heat transfer and suppressing swelling, and a battery pack and a vehicle including the same.

In another aspect, the present disclosure provides a battery module capable of discharging gas in a desired direction, in particular, in the remaining directions excluding the upward direction.

In another aspect, the present disclosure provides a battery pack with improved stability by including such a battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module that includes: a cell stack including a plurality of battery cells stacked in at least one direction; a module case configured to accommodate the cell stack; a bus bar assembly including a bus bar terminal and a bus bar frame configured such that the bus bar terminal is seated thereon, and configured to electrically connect the plurality of battery cells; and a cover member extending from one end of the bus bar frame in a direction toward the cell stack so as to cover at least a portion of the cell stack.

The cell stack may include at least one thermal barrier between the plurality of battery cells.

The bus bar frame may include: a bus bar seating portion on which the bus bar terminal is seated; an electrode lead through-hole through which the electrode lead passes; and a thermal barrier accommodation portion configured to accommodate the thermal barrier.

The cover member may include a first cell cover portion configured to cover at least a portion of the upper face of the cell stack.

The cover member may include a second cell cover portion configured to cover at least a portion of the side face of the cell stack.

Each of the plurality of battery cells may include an electrode assembly, a pouch case, and an electrode lead.

The pouch case may include: an accommodation portion configured to accommodate the electrode assembly; and a sealing portion extending outwards by a predetermined length from the perimeter of the accommodation portion.

The sealing portion may include a terrace portion provided with an electrode lead.

The first cell cover portion may cover an area corresponding to the terrace portion in the cell stack.

The battery module may include a pad between the first cell cover portion and the cell stack.

The pad may be configured such that the surface thereof seated on the cell stack has a shape corresponding to the surface of the cell stack.

The pad may have a thickness corresponding to the length between the first cell cover portion and the cell stack.

The pad may include an elastic material.

The cell stack may be configured such that the plurality of battery cells is stacked horizontally in an upright state.

The cover member may cover the upper face of the cell stack.

The module case may have a venting portion that is disposed at least one of the lower, front, and rear faces of the cell stack.

The venting portion may be configured such that gas generated from at least one of the plurality of battery cells is discharged to the outside.

The bus bar frame may have a guide portion configured to guide gas generated from at least one of the plurality of battery cells to the venting portion.

The venting portion may be disposed adjacent to the terrace portion.

A battery pack according to the present disclosure may include the battery module according to the present disclosure.

A vehicle according to the present disclosure may include a battery pack according to the present disclosure.

### Advantageous Effects

According to one aspect of the present disclosure, when gas is generated from a battery cell, the gas is prevented from moving toward the cover member. In particular, if the cover member covers the upper face of the cell stack, the gas is prevented from moving upwards, thereby guiding movement of the gas in a desired direction to be discharged. Therefore, in the case where the battery module is mounted to the lower part of the vehicle, it is possible to prevent high-temperature gas from being discharged upwards and causing significant damage to the occupants.

According to another aspect of the present disclosure, it is possible to delay or prevent a thermal chain reaction in which flame and/or heat generated in a thermal event occurring in a specific battery cell transfer to other adjacent battery cells. Additionally, the thermal barrier is able to absorb or suppress the pressure generated by swelling of the battery cell.

According to another aspect of the present disclosure, the thermal barrier is able to be accommodated in the thermal barrier accommodation portion and stably fixed. Therefore, the thermal barrier is able to effectively absorb or suppress the pressure generated by swelling of the battery cell.

According to another aspect of the present disclosure, if gas or flame occurs in the terrace portion of the battery cell, the gas or flame can be surely suppressed and prevented from moving to the upper side of the cell stack. In addition, when injecting resin or the like onto the surface of the cell stack, it is possible to prevent the resin from overflowing into the space between the cell stack and the cover member.

According to another aspect of the present disclosure, the module case can be stably supported by the thermal barrier. In addition, the cell stack and the module case can be easily fixed by injecting resin into the space between the protrusion formed on the top of the battery cell and the adjacent protrusions.

According to another aspect of the present disclosure, gas or flame generated from the terrace portion of the battery cell can be discharged to the outside of the battery module through the venting portion. In addition, gas or flame can be discharged more effectively by the guide portion.

### DESCRIPTION OF DRAWINGS

FIG. 1 is a diagram illustrating the appearance of a battery module according to the present disclosure.
FIG. 2 is an exploded perspective view of a battery module according to the present disclosure.
FIGS. 3 and 4 are diagrams illustrating some elements included in a battery module according to the present disclosure.
FIG. 5 is a diagram illustrating a battery cell included in a battery module according to the present disclosure.
FIGS. 6 to 8 are diagrams illustrating some elements included in a battery module according to the present disclosure.
FIG. 9 is a diagram illustrating a battery pack according to the present disclosure.
FIG. 10 is a diagram illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention below, serve to provide further understanding of the technical idea of the present disclosure, and thus, the present disclosure is not construed as being limited to the drawings. The same reference numerals indicate the same elements. In addition, in the drawings, the thickness, proportions, and dimensions of elements are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as up, down, left, right, front, and back are used in this specification, it is obvious to those skilled in the art that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

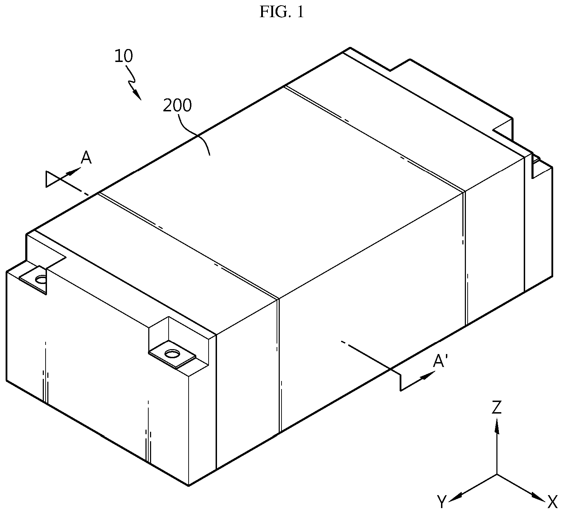

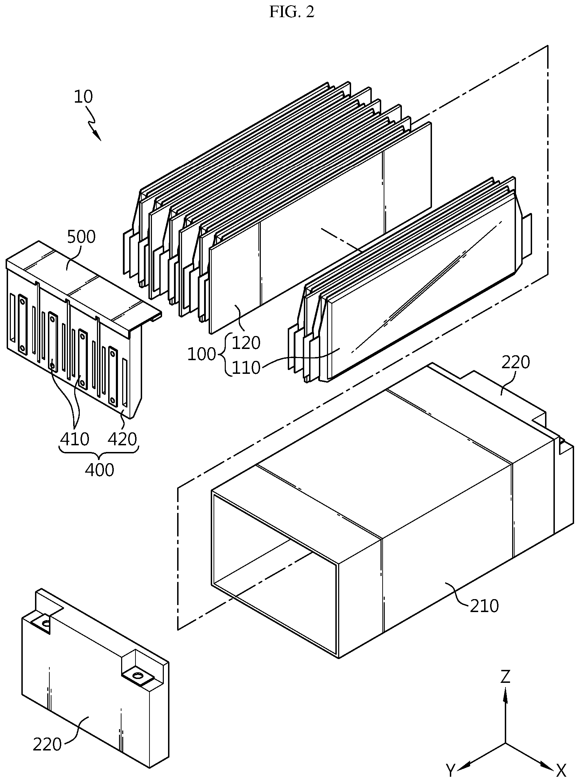

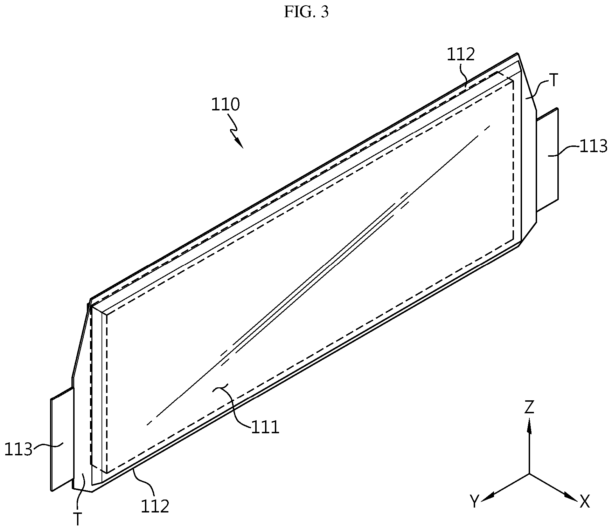

FIG. 1 is a diagram illustrating the appearance of a battery module according to the present disclosure. FIG. 2 is an exploded perspective view of a battery module according to the present disclosure. FIG. 3 is a diagram illustrating a battery cell included in a battery module according to the present disclosure.

Referring to FIGS. 1 to 3, a battery module 10 according to the present disclosure may include a cell stack 100, a module case 200, a bus bar assembly 400, and a cover member 500.

The cell stack 100 may include a plurality of battery cells 110 stacked in at least one direction. Here, each battery cell 110 may refer to a secondary battery. The secondary battery may include an electrode assembly, an electrolyte, and a battery case. In particular, the cell stack 100 may be configured such that a plurality of pouch-type secondary batteries is arranged side by side in the horizontal direction while their wide surfaces face each other in an upright state.

The battery cell 110 may include an electrode assembly, a pouch case, and an electrode lead 113. The pouch case may include an accommodation portion 111 for accommodating the electrode assembly and a sealing portion 112 extending outwards by a predetermined length from the perimeter of the accommodation portion 111. The accommodation portion 111 may correspond to approximately the middle portion of the pouch case, and the sealing portion 112 may be a portion that is heat-sealed along the perimeter of the accommodation portion 111 in order to seal the accommodation portion 111. The pouch case may include an upper case and a lower case, and the pouch case may be sealed by heat-sealing the edge of the upper case and the edge of the lower case in contact with each other. A terrace portion T may be an area located in a direction in which the electrode lead 113 extends to the outside of the pouch case.

The terrace portion T has an area where the electrode lead 113 is interposed between the upper case and the lower case, so the sealing force thereof may be structurally lower than that of the remaining area of the sealing portion 112. An empty space may be formed between the terrace portion T and the electrode assembly. This empty space may function as a gas collection space where gas generated inside the battery cell 110 is collected. Therefore, when gas is generated inside the battery cell 110, the gas may be collected in the gas collection space, and gas venting due to rupture of the sealing portion 112 according to an increase in internal pressure may occur preferentially in the terrace portion T.

The module case 200 may be configured to accommodate the cell stack 100. The module case 200 may be configured to have an accommodation space capable of accommodating the cell stack 100. The module case 200 may have an approximately square pillar shape. The module case 200 may include a case body 210 comprised of four covers constituting respective surfaces, and a pair of end covers 220 covering the front and back of the cell stack 100.

The bus bar assembly 400 may include a bus bar terminal 410 and a bus bar frame 420. The bus bar terminal 410 may be connected to the electrode lead 113. The bus bar frame 420 may be configured such that the bus bar terminal 410 is seated thereon. The bus bar frame 420 may include an electrically insulating material to be insulated from the bus bar terminal 410. The bus bar frame 420 may include a polymer material such as plastic. In the case where the battery cell 110 is a bidirectional battery cell 110, the bus bar assembly 400 may be located at both ends where electrode leads 113 are provided. In the case where the battery cell 110 is a unidirectional battery cell 110, the bus bar assembly 400 may be located at one end where the electrode lead 113 is provided.

The cover member 500 may extend from one end of the bus bar frame 420 toward the cell stack 100 so as to cover at least a portion of the cell stack 100. The cover member 500 may extend from the upper end (the end located in the +Z-axis direction) of the bus bar frame 420 toward the cell stack 100 (in the -Y-axis direction). The cover member 500 may be made of a mica or SUS material. The cover member 500 may be configured such that the surface of an electrically conductive body is coated with an electrically insulating material.

According to this configuration of the present disclosure, when gas is generated from the battery cell 110, the gas is suppressed from moving toward the cover member 500. In the case where the cover member 500 covers the upper surface of the cell stack 100, since gas is prevented from moving upwards, the gas may be guided in a desired direction to be discharged. Therefore, in the case where the battery module 10 is mounted to a lower part of the vehicle, it is possible to prevent high-temperature gas from being discharged upwards and causing significant damage to the occupants.

Referring back to FIG. 2, the cell stack 100 may include a thermal barrier 120.

At least one thermal barrier 120 may be disposed between a plurality of battery cells 110. The thermal barrier 120 may be disposed between two adjacent battery cells 110. The thermal barrier 120 may be configured in a plate shape. In the case where a plurality of pouch-type battery cells 110 is stacked in the left and right directions in an upright state, the thermal barrier 120 may be interposed between two adjacent cells in an upright state while both surfaces thereof face in the left and right directions.

The thermal barrier 120 may be configured to block or delay the propagation of flame and/or heat. Additionally, the thermal barrier 120 may be configured to absorb or suppress pressure generated by swelling of the battery cell 110. The thermal barrier 120 may be made of a material that is resistant to high temperatures. The thermal barrier 120 may include materials such as mica, glass fiber-reinforced plastic (GFRP), or carbon fiber-reinforced plastic (CFRP).

According to this configuration of the present disclosure, it is possible to delay or prevent a thermal chain reaction in which flame and/or heat generated in a thermal event occurring in a specific battery cell 110 transfer to other adjacent battery cells 110. Additionally, the thermal barrier 120 is able to absorb or suppress the pressure generated by swelling of the battery cell 110.

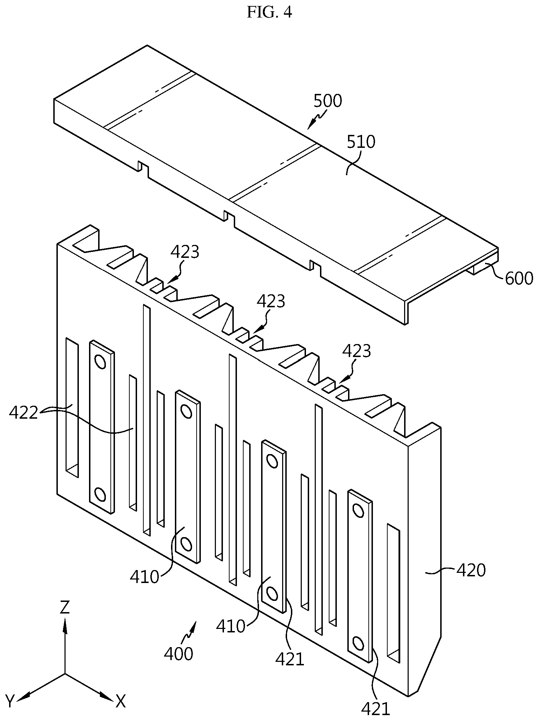

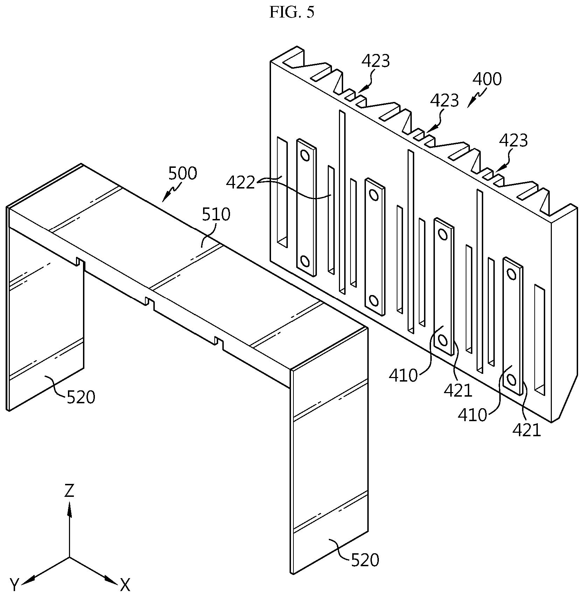

FIGS. 4 and 5 are diagrams illustrating some elements included in a battery module according to the present disclosure.

Referring to FIGS. 4 and 5, the bus bar frame 420 may include a bus bar terminal seating portion 421, an electrode lead through-hole 422, and a thermal barrier accommodation portion 423.
the bus bar terminal 410 may be seated on the bus bar terminal seating portion 421. The bus bar terminal seating portion 421 may be configured to be recessed to conform to the shape of the bus bar terminal 410 such that the bus bar terminal 410 may be seated thereon.

The electrode lead through-hole 422 may be configured to allow the electrode lead 113 to pass through the same. The electrode lead through-hole 422 may be a hole provided at a position approximately corresponding to the electrode lead 113. The electrode lead through-hole 422 may have a shape that approximately corresponds to the electrode lead 113. The electrode lead through-hole 422 may be, for example, an approximately rectangular hole. The electrode lead 113 may pass through the electrode lead through-hole 422 and may then be coupled to the bus bar terminal 410.

The thermal barrier accommodation portion 423 may accommodate the thermal barrier 120. The thermal barrier accommodation portion 423 may be a hole or groove formed approximately to conform to the height of the thermal barrier 120. The thermal battery accommodation portion 111 may be a hole or groove in an approximately rectangular shape. The thermal barrier 120 may protrude to the outside of the bus bar frame 420 by passing through the hole-shaped thermal barrier accommodation portion 423. The thermal barrier 120 may be inserted into the thermal barrier accommodation portion 423 configured as a groove formed on the inner surface of the bus bar frame 420.

According to this configuration of the present disclosure, the thermal barrier 120 may be accommodated inside the thermal barrier accommodation portion 423 and stably fixed. Therefore, the thermal barrier 120 may effectively absorb or suppress the pressure generated by swelling of the battery cell 110. In another aspect, according to this configuration of the present disclosure, the thermal barrier 120 may cover the entire area of the battery cell 110 in the longitudinal direction (direction parallel to the Y-axis), thereby preventing or delaying thermal propagation between the battery cells 110 adjacent to each other.

Referring back to FIG. 4, the cover member 500 may include a first cell cover portion 510.

The first cell cover portion 510 may cover at least a portion of the upper face of the cell stack 100. The first cell cover portion 510 may cover the area corresponding to the terrace portion T in the cell stack 100.

Referring back to FIG. 5, the cover member 500 may include a second cell cover portion 520.

The second cell cover portion 520 may cover at least a portion of the side face of the cell stack 100. The second cell cover portion 520 may cover the area corresponding to the terrace portion T in the cell stack 100. The second cell cover portion 520 may be provided on both side faces of the cell stack 100.

The cover member 500 may be connected to the bus bar frame 420. The cover member 500 may be connected to the bus bar frame 420 in various ways. For example, they may be connected to each other by bolting, hooking, insertion grooves and insertion protrusions, and the like. In addition, the bus bar frame 420 and the cover member 500 may be configured as one member.

According to this configuration of the present disclosure, if gas generated inside the battery cell 110 is discharged through the terrace portion T, the movement of the gas may be suppressed by the first cell cover portion 510 and/or the second cell cover portion 520, thereby guiding and discharge the gas in a desired direction. In particular, in the case where both the first cell cover portion 510 and the second cell cover portion 520 are provided, gas may be discharged only from the bottom.

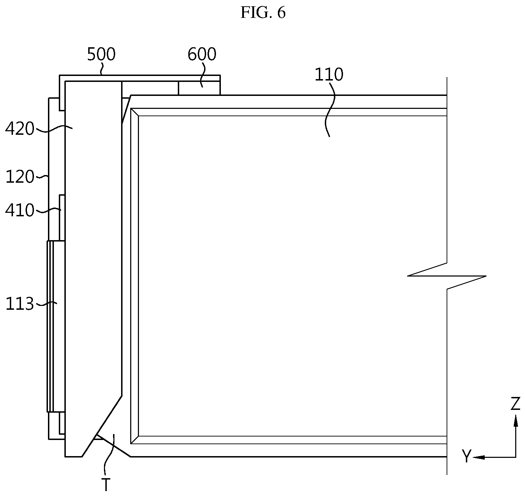

FIGS. 6 to 7 are diagrams illustrating some elements included in a battery module according to the present disclosure.

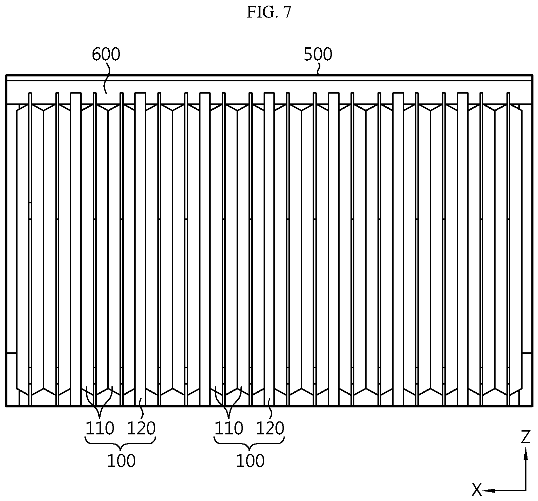

Referring to FIGS. 6 and 7, the battery module 10 may include a pad 600.

The pad 600 may be provided between the first cell cover portion 510 and the cell stack 100. The pad 600 may be attached to the surface of the first cell cover portion 510 facing the cell stack 100. The pad 600 may be configured such that the surface thereof to be seated on the cell stack 100 has a shape corresponding to the surface of the cell stack 100. The pad 600 may have a thickness corresponding to the length between the first cell cover portion 510 and the cell stack 100. The lower surface of the pad 600 may be configured in a shape corresponding to a plurality of irregularities formed on the upper surface of the cell stack 100. The pad 600 may be configured to seal the space between the cell stack 100 and the cover member 500.

The pad 600 may include an elastic material. The pad 600 may include a polyurethane (PU) material.

According to this configuration of the present disclosure, when gas or flame generated inside the battery cell 110 is discharged through the terrace portion T, it is possible to surely suppress and prevent the gas or flame from moving to the upper face of the cell stack 100. Additionally, in the case where resin or the like is injected onto the surface of the cell stack 100, the resin may be prevented from overflowing into the space between the cell stack 100 and the cover member 500.

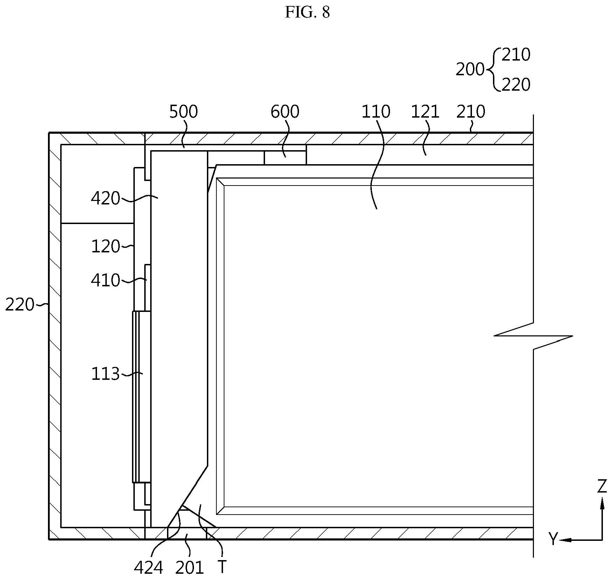

FIG. 8 is a diagram illustrating some elements included in a battery module 10 according to the present disclosure.

Referring to FIG. 8, the thermal barrier 120 may include a protrusion 121.

The protrusion 121 may protrude from one end of the thermal barrier 120 toward the module case 200. The protrusion 121 may extend from the upper end of the thermal barrier 120 to the module case 200. The protrusion 121 may extend along the longitudinal direction (direction parallel to the Y-axis) of the battery cell 110. The protrusion 121 may extend along the longitudinal direction (direction parallel to the Y-axis) of the battery cell 110 to have the same length as the thermal barrier 120.

According to this configuration of the present disclosure, the module case 200 may be stably supported by the thermal barrier 120. In addition, resin may be injected into the space between the protrusion 121 formed on the top of the battery cell 110 and an adjacent protrusion 121 to facilitate fixation between the cell stack 100 and the module case 200. In particular, in the case where the protrusion 121 extends along the longitudinal direction (direction parallel to the Y-axis) of the battery cell 110 to have the same length as the thermal barrier 120, the pad 600 may have a groove formed to accommodate the protrusion 121, thereby maximizing the effect of preventing or delaying heat transfer between adjacent battery cells 110.

Referring back to FIG. 8, the module case 200 may include a venting portion 201. The bus bar frame 420 may have a guide portion 424.

Hereinafter, a description will be made based on the case where the cell stack 100 includes a plurality of battery cells 110 stacked horizontally in an upright state and where the cover member 500 covers the upper face of the cell stack 100.

The venting portion 201 may be disposed at least one of the lower, front, and rear faces of the cell stack 100. The venting portion 201 may be disposed at the front and/or rear sides of the module case 200 such that the gas or flame emitted through the electrode lead through-hole 422 and/or the thermal barrier accommodation portion 423 of the bus bar frame 420 may be discharged. The venting portion 201 may be disposed at the bottom of the module case 200. The venting portion 201 may be disposed adjacent to the terrace portion T.

The venting portion 201 may be configured to discharge gas emitted from at least one of the plurality of battery cells 110 to the outside. The venting portion 201 may be configured in the form of a simple hole passing through the module case 200. In addition, it may be a specific device that is closed in a normal state, instead of completely open, and opened depending on a change in pressure or temperature, as well as the completely open hole. The venting portion 201 may be, for example, a one-way valve.

The guide portion 424 may be configured to guide gas generated from at least one of the plurality of battery cells 110 to the venting portion 201. The guide portion 424 may be provided at the bottom of the bus bar frame 420. The thickness of the guide portion 424 may be reduced as it is closer to the venting portion 201. The guide portion 424 may be configured such that the space between the bus bar frame 420 and the terrace portion T widens as it is closer to the venting portion 201.

According to this configuration of the present disclosure, gas or flame generated in the terrace portion T of the battery cell 110 may be discharged to the outside of the battery module 10 through the venting portion 201. Additionally, gas or flame may be discharged more effectively by the guide portion 424.

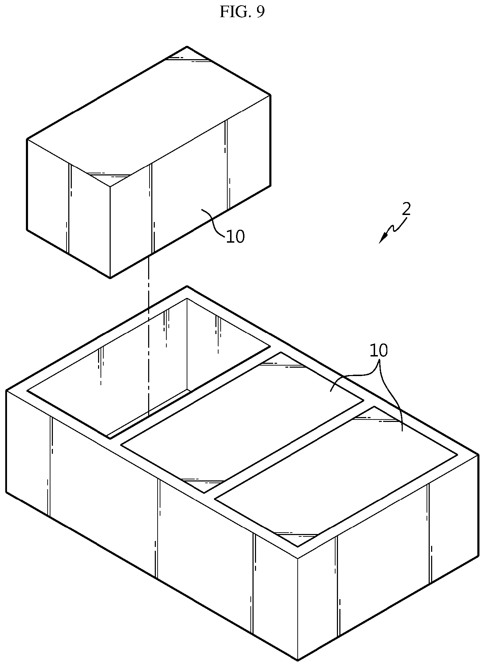

FIG. 9 is a diagram illustrating a battery pack according to the present disclosure.

Referring to FIG. 9, the battery pack 2 may include one or more battery modules 10 according to the present disclosure described above. In addition, the battery pack 2 according to the present disclosure may further include, in addition to the battery module 10, various other elements i.e., elements of various battery packs 2 such as a BMS, a busbar, a pack case, a relay, a current sensor, and the like, which are well known at the time of filing the present disclosure.

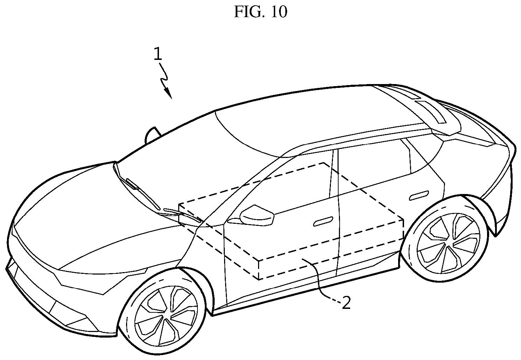

FIG. 10 is a diagram illustrating a vehicle according to the present disclosure.

Referring to FIG. 10, the vehicle 1 may include one or more battery packs 2 according to the present disclosure described above. In addition, the vehicle 1 according to the present disclosure may further include various other elements included in the vehicle 1, in addition to the battery packs 2. For example, the vehicle 1 according to the present disclosure may further include a vehicle body, a motor, a control device such as an ECU (electronic control unit), and the like, in addition to the battery pack 2 according to the present disclosure.

As described above, although the present disclosure has been described based on the preferred embodiments with reference to the accompanying drawings, it is obvious to those skilled in the art will that various modified embodiments may be implemented within the technical scope of the present disclosure. Therefore, the scope of the present disclosure should be construed according to the claims described to include various modifications.

## Claims

1. A battery module comprising:
a cell stack comprising a plurality of battery cells stacked in at least one direction;
a module case configured to accommodate the cell stack;
a bus bar assembly comprising a bus bar terminal and a bus bar frame configured such that the bus bar terminal is seated thereon, and configured to electrically connect the plurality of battery cells; and
a cover member extending from one end of the bus bar frame in a direction toward the cell stack so as to cover at least a portion of the cell stack.

2. The battery module according to claim 1,
wherein the cell stack comprises
at least one thermal barrier between the plurality of battery cells.

3. The battery module according to claim 2,
wherein the bus bar frame comprises:
a bus bar seating portion on which the bus bar terminal is seated;
an electrode lead through-hole through which the electrode lead passes; and
a thermal barrier accommodation portion configured to accommodate the thermal barrier.

4. The battery module according to claim 1,
wherein the cover member comprises
a first cell cover portion configured to cover at least a portion of the upper face of the cell stack.

5. The battery module according to claim 1,
wherein the cover member comprises
a second cell cover portion configured to cover at least a portion of the side face of the cell stack.

6. The battery module according to claim 4,
wherein each of the plurality of battery cells comprises
an electrode assembly, a pouch case, and an electrode lead,
wherein the pouch case comprises: an accommodation portion configured to accommodate the electrode assembly; and a sealing portion extending outwards by a predetermined length from the perimeter of the accommodation portion,
wherein the sealing portion comprises a terrace portion provided with an electrode lead, and
wherein the first cell cover portion covers an area corresponding to the terrace portion in the cell stack.

7. The battery module according to claim 4,
wherein the battery module comprises a pad between the first cell cover portion and the cell stack.

8. The battery module according to claim 7,
wherein the pad is
configured such that the surface thereof seated on the cell stack has a shape corresponding to the surface of the cell stack.

9. The battery module according to claim 7,
wherein the pad has
a thickness corresponding to the length between the first cell cover portion and the cell stack.

10. The battery module according to claim 7,
wherein the pad comprises
an elastic material.

11. The battery module according to claim 6,
wherein the cell stack is configured such that the plurality of battery cells is stacked horizontally in an upright state,
wherein the cover member covers the upper face of the cell stack, and
wherein the module case has a venting portion that is disposed at least one of the lower, front, and rear faces of the cell stack and configured such that gas generated from at least one of the plurality of battery cells is discharged to the outside.

12. The battery module according to claim 11,
wherein the bus bar frame has
a guide portion configured to guide gas generated from at least one of the plurality of battery cells to the venting portion.

13. The battery module according to claim 11,
wherein the venting portion is,
disposed adjacent to the terrace portion.

14. A battery pack comprising the battery module according to any one of claims 1 to 13.

15. A vehicle comprising a battery pack according to claim 14.
